Europäisches Patentamt

European Patent Office

Office européen des brevets

(11) Veröffentlichungsnummer : **0 035 264**
**B1**

(12) **EUROPÄISCHE PATENTSCHRIFT**

(45) Veröffentlichungstag der Patentschrift :
09.03.83

(21) Anmeldenummer : **81101469.5**

(22) Anmeldetag : **28.02.81**

(51) Int. Cl.³ : **C 02 F   3/32**

(54) Verfahren und Anlage zur Behandlung flüssiger landwirtschaftlicher Abfälle.

(30) Priorität : **04.03.80 DE 3008127**

(43) Veröffentlichungstag der Anmeldung :
**09.09.81 Patentblatt 81/36**

(45) Bekanntmachung des Hinweises auf die Patenterteilung : **09.03.83 Patentblatt 83/10**

(84) Benannte Vertragsstaaten :
**DE FR GB IT NL**

(56) Entgegenhaltungen :
**DE A 2 259 788**
**DE A 2 519 887**
**DE A 2 655 614**

(73) Patentinhaber : **Kernforschungsanlage Jülich Gesellschaft mit beschränkter Haftung
Postfach 1913
D-5170 Jülich (DE)**

(72) Erfinder : **Groeneweg, Joost
Im Reuter 13
D-5166 Kreuzau-Drove (DE)**
Erfinder : **Schlüter, Manfred
Auf der Schanz 26
D-4048 Grevenbroich (DE)**

## Verfahren und Anlage zur Behandlung flüssiger landwirtschaftlicher Abfälle

Die Erfindung bezieht sich auf ein Verfahren zur Behandlung von ggf. anaerob vorbehandelten flüssigen landwirtschaftlichen Abfällen, bei dem man die Abwässer zur Reinigung einer Algen/Bakterienmischkultur unterwirft sowie auf eine Anlage zur Durchführung des Verfahrens.

Die Reinigung von Abwasser, auch Bioabwasser, mit Hilfe von Algen ist seit längerer Zeit bekannt, jedoch stehen der praktischen Anwendung auf breiterer Basis Schwierigkeiten bei der Abtrennung und Entfernung der Algen aus dem gereinigten Wasser entgegen. Dafür sind Sedimentations- und Flockungsverfahren unter Zusatz entsprechender Flockungsmittel bekannt, die jedoch den Nachteil haben, daß die meisten Flockungsmittel selbst toxisch wirken und die Biomasse mit Schwermetallen angereichert wird. Man kennt weiter mechanische Ernteverfahren, wie das einfache Aussieben, das jedoch bei den meisten im Abwasser wachsenden Algen wegen zu geringer Größe ausscheidet. Die ebenfalls bekannte Entfernung mit Hilfe von Separatoren, wie z. B. Düsen- und Tellerseparatoren, erfordert erhebliche Energien und einen hohen apparativen Aufwand.

Aufgabe der Erfindung ist daher eine Ausgestaltung der Abwasserreinigung mit Algen, insbesondere der Reinigung von Bioabwässern, die eine verläßlich arbeitende Anlage möglich macht und die Probleme bei der Suspensaabtrennung aus dem Ablauf im wesentlichen beseitigt.

Zu diesem Zweck ist das erfindungsgemäße Verfahren der eingangs genannten Art dadurch gekennzeichnet, daß man den pH-Wert der Algen/Bakterienmischkultur so steuert, daß eine Vermehrung von Rotatorien verhindert wird und die so gewonnene Algen/Bakteriensuspension nachfolgend einem belüfteten Kulturreaktor mit Rotatorien für eine Rotatorienkultur zuführt und schließlich die Rotatorien vom gereinigten Wasser abtrennt.

Zwar ist die Züchtung von Rotatorien unter Verfütterung von Algen seit längerer Zeit bekannt, jedoch wurden dafür vornehmlich unter Zusatz üblicher Nährstoffe wie Ammoniumnitrat und Phosphate sowie Kohlendioxid als Kohlenstoffquelle gezüchtete Algenmonokulturen angewandt, während dem Einsatz von Rotatorien bei der Aufbearbeitung landwirtschaftlicher Abfälle ganz offensichtlich die bekannte Empfindlichkeit, (insbesondere $NH_4^+$-Anfälligkeit) von Rotatorienkulturen gegenüber äußeren Einflüssen im Wege stand.

Ferner zeigen sich bei Abwasserreinigungsanlagen mit Algen/Bakterienmischkulturen oft Schwierigkeiten, da je nach Belastung oder Sonneneinstrahlung mitunter Fremdpopulationen auftreten, die das Algenwachstum behindern und damit die Funktion des ganzen Algen/Bakteriensystems für längere Zeit zerstören.

Es wurde nun festgestellt, daß man durchaus erfolgreich arbeiten kann, wenn man die Algen/Bakterienkultur streng von der Rotatorienkultur trennt und in der ersten Stufe, der Algen/Bakterienmischkultur, den pH-Wert so steuert, daß eine Rotatorienvermehrung verhindert wird, was insbesondere über die Abwasser-Belastung der Kultur erreicht werden kann. Vorzugsweise soll der pH-Wert so zumindest stundenweise (insbesondere am Tage) über 8,5 gehalten werden.

Nach der ausreichenden Reinigung des Wassers mit Algen/Bakterien wird dann die erhaltene Masse in einer zweiten Stufe unter Beachtung der für die Rotatorien erforderlichen Kulturbedingungen einer Rotatorienkultur zugeführt. Insbesondere wird dazu die von Grobschmutz befreite Algen/Bakteriensuspension (z. B. durch Einleiten von $CO_2$ oder einfach Belüften — insbesondere im Dunklen —) auf einen pH-Wert von 6 bis 8 eingestellt und die Rotatorienkultur bei 15 bis 25 °C durchgeführt.

Erstaunlicherweise wird durch dieses zumindest zweistufige Verfahren eine befriedigende Abwasserreinigung erreicht, obwohl zunächst befürchtet werden mußte, daß eine gewisse « Neuverschmutzung » durch Ausscheidungsprodukte der Rotatorien auftreten würde.

Die bei dem Verfahren schließlich erhaltenen Rotatorien können ausgezeichnet als Nahrung für Jungfische dienen, deren Zucht sich zweckmäßigerweise unmittelbar an die Abwasserreinigung anschließen kann.

Das erfindungsgemäße Verfahren ist diskontinuierlich und kontinuierlich durchführbar, wobei die jeweilige Kulturdauer den herrschenden Bedingungen von Temperatur, pH-Wert, Lichteinfall, Keimzahl usw. ohne weiteres angepaßt werden kann. Vorzugsweise wird eine Aufenthaltszeit des Abwassers im Algen/Bakterienmischkulturreaktor von 3 bis 6 Tagen bei einer mittleren Temperatur von 18 °C und eine Aufenthaltsdauer der Algen/Bakteriensuspension im Rotatorienkulturreaktor von 2 bis 4 Tagen bei einer mittleren Temperatur von etwa 20 °C vorgesehen.

Als Algen können insbesondere Arten von Chlorella oder Scenedesmus wie Scenedesmus armatus, Scenedesmus acutus, S. opoliensis und S. acuminatus herangezogen werden. Speziell untersucht wurde die Alge Scenedesmus falcatus in Verbindung mit der Rotatorie Brachionus rubens.

Weitere Besonderheiten der Erfindung gehen aus den Ansprüchen sowie der nachfolgenden Beschreibung eines Ausführungsbeispiels hervor, das durch das angefügte Fließschema veranschaulicht wird.

Dieses Ausführungsbeispiel bezieht sich auf die Verarbeitung von Gülle, die von den Ställen kommend in einen Sammelbehälter 1 fließt. Von dort her gelangt die Gülle mittels einer Pumpe zur einer Vorrichtung 2 (wie einem Schüttelsieb, einer Zentrifuge oder dergl.) zur Entfernung der Feststoffe 3 von der flüssigen Phase. Diese über die Leitung 4 weitergeführte flüssige Phase wird bei 5 mit Leitungswasser aus der Leitung 6 oder rückgeführtem Wasser verdünnt und kontinuierlich einem Algen/Bakterien-Freilandreaktor 7 zugeführt. Dieser besteht im wesentlichen aus einem flachen Becken bzw. einem flachen Gerinne (von bis zu 50 cm Tiefe), in dem die Algen/Bakterienmischkultur z. B. mittels eines Schaufelrades so weit in Bewegung gehalten wird, daß eine durchgreifende Lichteinwirkung auf die Gesamtmasse gewährleistet ist. Die Algen/Bakteriensuspension hat in diesem Reaktor eine theoretische Aufenthaltszeit von etwa 4 bis 6 Tagen (im Sommer), die sich nach der mittleren Temperatur richtet und in kälteren Jahreszeiten länger sein soll. Diese Aufenthaltszeit wird durch die kontinuierliche Zugabe von verdünnter Gülle eingestellt.

Die Algen/Bakteriensuspension verläßt den Reaktor 7 durch Überlauf (mit gleichzeitiger Regulierung des Flüssigkeitsspiegels im Reaktor 7) und gelangt über ein Grobsieb 8' zur Entfernung von Grobschmutz wie Mückenlarven in einen belüfteten Zwischenbehälter 8. In diesem Zwischenbehälter kann, falls erforderlich, eine Temperatureinstellung auf Werte von 15 bis 25 °C und eine pH-Regulierung auf Werte von 6 bis 8 vorgenommen werden, bevor die Suspension kontinuierlich oder diskontinuierlich dem Rotorienkulturreaktor 9 zugeführt wird.

Dieser Rotatorienkulturreaktor 9 kann erheblich tiefer sein als der Algen/Bakterienmischkulturreaktor 7 und er wird insbesondere durch ein zur Vermeidung größerer Temperaturschwankungen in einem Innenraum vorgesehenes, am Boden trichterförmiges Gefäß gebildet, in dem die Suspension beständig z. B. durch Einblasen von Luft umgewälzt und mit Sauerstoff versorgt wird. Aus dem Behälter 9 gelangt die darin gebildete Rotatorienkultur in eine Trennvorrichtung 10 zum Absieben der Rotatorien 11, während die flüssige Phase (bei 12) verworfen oder als Verdünnungswasser (in 5) verwendet wird. Die Rotatorienkultur kann gegebenenfalls einen zusätzlichen Suspensionskreislauf aufweisen, mit einem Separator 13 (wie zum Beispiel einem Lamellenseparator) zur Abtrennung von Kotpartikeln der Rotatorien. Die theoretische Aufenthaltszeit im Rotatorienkulturreaktor lag bei 2 bis 4 Tagen bei einer Temperatur in der Gegend von 20 °C. In der Algen/Bakterienbiomasse bildete die Algenart Scenedesmus falcatus die Hauptmenge bei einer Gesamtkonzentration von etwa 500 mg/1 Biomaterial. Der Rotatorienkulturreaktor wurde mit der Rotatorie Brachionus rubens geimpft. Im Ablauf des Rotatorienkulturreaktors befanden sich 300 bis 400 Rotatorien pro ml.

Gemäß einer Verfahrensvariante wird die Aufenthaltszeit im Rotatorienkulturreaktor 9 auf 2 Tage mit gleichzeitiger Teilrückführung der aus dem Behälter austretenden Suspension reduziert. Durch diese Verfahrensweise entwickelte sich neben den unverändert in Mengen von 300 bis 400 Tieren/ml anfallenden Rotatorien eine Population von Ciliaten (Paramaecum sp.) von bis zu 4 000 Tieren/ml.

Nach Abtrennung der Rotatorien z. B. mit Hilfe eines Siebes 10' mit einem Maschendurchmesser von etwa 80 bis 150 um wurde die Ciliatensuspension einem zweiten Reaktor 14 (gegebenenfalls mit Suspensionskreislauf und Separator 15) zugeführt, in dem sich eine Kultur des Rotatoriums Epiphanes senta befand. Dieses war in der Lage, die Ciliaten aus dem Wasser zu entfernen. Diese Rotatorien lassen sich je nach Wunsch kontinuierlich oder diskontinuierlich durch Aussieben (16) und Sammeln (17) in analoger Weise wie beim ersten Reaktor 9 ernten. Das nach der Rotatorienernte anfallende gereinigte Wasser kann über 12 Vorflutern zugeführt oder zum größten Teil über 18 als Verdünnungswasser verwendet werden.

Die auf diese Weise gewonnenen Rotatorien eignen sich ausgezeichnet als billiges Fischbrutfutter, wobei gegebenenfalls sogar das Aussieben unterbleiben kann.

Das bei 12 abgegebene Wasser ist praktisch frei von biologisch abbaubaren Verunreinigungen und stellt keine Belästigung mehr dar. Die sonst bei der biologischen Abwasserbehandlung mit Algen erforderliche, relativ problematische Abtrennung der Biomassen durch Ausflocken oder Abzentrifugieren wird bei dieser Verfahrensweise eingespart, die zudem ein ausgezeichnet brauchbares Produkt liefert.

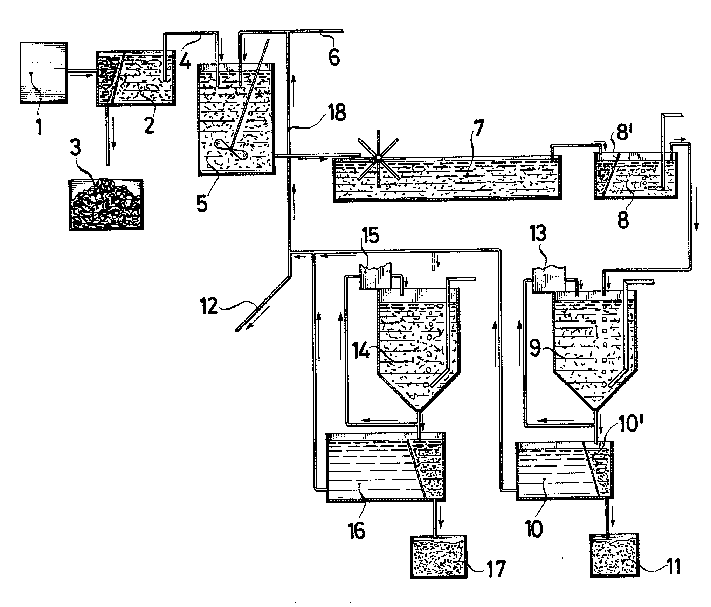

## Ansprüche

1. Verfahren zur Behandlung von ggf. anaerob vorbehandelten flüssigen landwirtschaftlichen Abfällen, bei dem man die Abwässer zur Reinigung einer Algen/Bakterienmischkultur unterwirft, dadurch gekennzeichnet, daß man den pH-Wert der Algen/Bakterienmischkultur so steuert, daß eine Vermehrung von Rotatorien verhindert wird und die so gewonnene Algen/Bakteriensuspension nachfolgend einem belüfteten Kulturreaktor mit Rotatorien für eine Rotatorienkultur zuführt und schließlich die Rotatorien von gereinigtem Wasser abtrennt.

2. Verfahren nach Anspruch 1, dadurch gekennzeichnet, daß der pH-Wert der Algen/Bakterienmischkultur über ihre Abwasser-Belastung gesteuert wird.

3. Verfahren nach Anspruch 1 oder 2, gekennzeichnet durch eine Aufenthaltsdauer des Abwassers in einem Algen/Bakterienmischkulturreaktor von 3 bis 6 Tagen bei einer mittleren Temperatur von etwa 18 °C und der Algen/Bakteriensuspension im Rotatorienkulturreaktor von 2 bis 4 Tagen bei einer mittleren Temperatur von etwa 20 °C.

4. Verfahren nach einem der Ansprüche 1 bis 3, dadurch gekennzeichnet, daß man eine Algen/Bakterienmischkultur auf der Basis von Scenedesmus falcatus betreibt und als Rotatorium Brachionus rubens züchtet.

5. Verfahren nach einem der vorangehenden Ansprüche, dadurch gekennzeichnet, daß man als flüssigen Abfall bei der Viehhaltung anfallende Gülle verwendet.

6. Verfahren nach Anspruch 1, dadurch gekennzeichnet, daß die Abwässer in flachen Freilandbecken für eine Algen/Bakterienmischkultur unter leichter Umwälzung verwendet werden.

7. Verfahren nach Anspruch 1, dadurch gekennzeichnet, daß die Rotatorienkultur unter Lichtabschluß erfolgt.

8. Verfahren nach einem der vorangehenden Ansprüche, dadurch gekennzeichnet, daß man die Rotatorien durch Aussieben vom verarmten Restwasser abtrennt.

9. Verfahren nach Anspruch 5, dadurch gekennzeichnet, daß die Gülle für die Algen/Bakterienmischkultur etwa 1 : 20 mit Wasser verdünnt wird.

10. Verfahren nach einem der vorangehenden Ansprüche, dadurch gekennzeichnet, daß man die Rotatorienkultur unter kontinuierlicher Teilrezyklierung betreibt.

11. Verfahren nach Anspruch 10, dadurch gekennzeichnet, daß man die nach Abtrennung der gebildeten Rotatorien verbleibende Flüssigkeit einer zweiten Ciliaten verdauenden Rotatorienkultur unterwirft.

12. Verfahren nach Anspruch 11, dadurch gekennzeichnet, daß für die zweite Kultur Epiphanes senta verwendet werden.

13. Verfahren nach einem der vorangehenden Ansprüche, dadurch gekennzeichnet, daß die von Grobschmutz befreite Algen/Bakteriensuspension vor Einspeisung in die Rotatorienkultur auf 15 bis 25 °C und pH 6 bis 8 eingestellt wird.

14. Anlage zur Abwasserreinigung nach Anspruch 1, mit zumindest einem Algen/Bakterienmischkulturreaktor (7), gekennzeichnet durch zumindest einen Rotatorienkulturreaktor (9).

## Claims

1. Process for treating liquid agricultural wastes, which may have been anaerobically pretreated, wherein the effluents are subjected for purification to a mixed algae/bacteria culture, characterised in that the pH value of the mixed algae/bacteria culture is controlled in such a way that propagation of rotatoria is prevented, and the algae/bacteria suspension thus obtained is subsequently passed to an aerated culture reactor with rotatoria for culturing rotatoria and, finally, the rotatoria are separated from the purified water.

2. Process according to Claim 1, characterised in that the pH value of the mixed algae/bacteria culture is controlled via its waste water load.

3. Process according to Claim 1 or 2, characterised by a residence time of the waste water in a mixed algae/bacteria culture reactor of 3 to 6 days at a mean temperature of about 18 °C, and by a residence time of the algae/bacteria suspension in the rotatoria culture reactor of 2 to 4 days at a mean temperature of about 20 °C.

4. Process according to one of Claims 1 to 3, characterised in that Scenedesmus falcatus is used as the basis of a mixed algae/bacteria culture and Brachionus rubens is bred as the rotatorium.

5. Process according to one of the preceding claims, characterised in that the liquid waste used is liquid manure obtained in stock rearing.

6. Process according to Claim 1, characterised in that the waste waters are used for a mixed algae/bacteria culture in flat outdoor basins with light circulation.

7. Process according to Claim 1, characterised in that the rotatoria culture is carried out in the dark.

8. Process according to one of the preceding claims, characterised in that the rotatoria are separated from the depleted residual water by screening.

9. Process according to Claim 5, characterised in that the liquid manure for the mixed algae/bacteria culture is diluted with water in a ratio of about 1 : 20.

10. Process according to one of the preceding claims, characterised in that the rotatoria culture is operated with continuous partial recycle.

11. Process according to Claim 10, characterised in that the liquid remaining after the rotatoria formed have been separated off is subjected to a second rotatoria culture which digests ciliates.

12. Process according to Claim 11, characterised in that Epiphanes senta are used for the second culture.

13. Process according to one of the preceding claims, characterised in that the algae/bacteria suspension, freed from coarse dirt, is adjusted to 15 to 25 °C and pH 6 to 8 before it is fed to the rotatoria culture.

14. Equipment for waste water purification according to Claim 1, with at least one mixed algae/bacteria culture reactor (7), characterised by at least one rotatoria culture reactor (9).

## Revendications

1. Procédé de traitement de déchets agricoles liquides traités le cas échéant au préalable par voie anaérobie, qui consiste à soumettre l'eau résiduaire à l'épuration par une culture mixte d'algues et de bactéries, caractérisé en ce qu'il consiste à régler le pH de la culture mixte d'algues et de bactéries de manière à empêcher une multiplication de rotifères et à envoyer ensuite, pour effectuer une culture de rotifères, la suspension d'algues et de bactéries ainsi obtenue à un réacteur de culture sous aération avec des rotifères et finalement à séparer les rotifères de l'eau épurée.

2. Procédé selon la revendication 1, caractérisé en ce qu'il consiste à régler le pH de la culture mixte d'algues et de bactéries par sa charge en eau résiduaire.

3. Procédé selon la revendication 1 ou 2, caractérisé par une durée de séjour de l'eau résiduaire dans un réacteur de culture mixte d'algues et de bactéries de 3 à 6 jours pour une température moyenne de 18 °C environ et de la suspension d'algues et de bactéries dans le réacteur de culture de rotifères de 2 à 4 jours pour une température moyenne de 20 °C environ.

4. Procédé suivant l'une des revendications 1 à 3, caractérisé en ce qu'il consiste à mettre en œuvre une culture mixte d'algues et de bactéries à base de scenedesmus falcatus et à cultiver comme rotifère brachionus rubens.

5. Procédé suivant l'une des revendications précédentes, caractérisé en ce qu'il consiste à utiliser comme déchets liquides du lisier se produisant dans l'élevage du bétail.

6. Procédé suivant la revendication 1, caractérisé en ce qu'il consiste à utiliser les eaux résiduaires dans des bassins plats en plein champ avec faible recirculation pour une culture mixte d'algues et de bactéries.

7. Procédé suivant la revendication 1, caractérisé en ce qu'il consiste à effectuer la culture de rotifères à l'abri de la lumière.

8. Procédé suivant l'une des revendications précédentes, caractérisé en ce qu'il consiste à séparer les rotifères de l'eau restante appauvrie par tamisage.

9. Procédé suivant la revendication 5, caractérisé en ce qu'il consiste à diluer le lisier pour la culture mixte d'algues et de bactéries par de l'eau dans le rapport 1 : 20 environ.

10. Procédé suivant l'une des revendications précédentes, caractérisé en ce qu'il consiste à effectuer la culture de rotifères sous recyclage partiel continu.

11. Procédé suivant la revendication 10, caractérisé en ce qu'il consiste à soumettre le liquide restant après la séparation des rotifères formés à une seconde culture de rotifères digérant des ciliates.

12. Procédé suivant la revendication 11, caractérisé en ce qu'il consiste à utiliser epiphanes senta pour la seconde culture.

13. Procédé suivant l'une des revendications précédentes, caractérisé en ce qu'il consiste à mettre la suspension d'algues et de bactéries débarrassée des saletés grossières à une température de 15 à 25 °C et un pH de 6 à 8 avant de l'envoyer à la culture des rotifères.

14. Installation d'épuration de l'eau résiduaire suivant la revendication 1, comprenant au moins un réacteur de culture mixte d'algues et de bactéries (7), caractérisé par au moins un réacteur de culture de rotifères (9).